# EUROPEAN PATENT APPLICATION

(11) **EP 4 640 427 A1**
(43) Date of publication of application: **29.10.2025**
(21) Application number: 24172194.3
(22) Date of filing: 24.04.2024
(51) Int. Cl.: B32B 7/12, B32B 21/06, B32B 27/10, B32B 27/30, B32B 27/32, B32B 27/36, B32B 29/00

(54) **LIVING SPACE COMPONENT, METHOD FOR MANUFACTURE**

(71) Applicant: Interprint GmbH, 59707 Arnsberg (DE)
(72) Inventor: David, Robert, 59494 Soest (DE); Bhattarai, Nimesh, Pittsfield, MA 01201 (US)
(74) Representative: Heckmann, Christian

(57) **Abstract**

The present invention relates to a living space component (100) such as a furniture or a flooring or the like comprising: at least one flat carrier unit (1); and at least one flat paper unit (2) for receiving an ink layer (5), wherein the paper unit (2) is firmly connected to the carrier unit (1). At least one at least partially covering thermoplastic material layer (4) is present, and wherein the thermoplastic material layer (4) is firmly connected to the flat paper unit (2). The invention further relates to a method of manufacturing such a living space component (100).

## Description

The present invention relates to a living space component comprising a carrier unit and a paper unit for receiving an ink layer. The invention also relates to a method for manufacturing such a living space component.

Different types of living space components such as furnitures, wall panels or flooring or the like are known from the state of the art:

On the one hand, living space components have become known in which a paper web is printed and applied to a wooden carrier board by pressing in a heated state or by laminating. A layer of ink can be applied for aesthetic reasons. The ink can be dried particularly quickly, e.g. by applying heat. Production is particularly cost-effective due to the use of water-soluble inks. However, the disadvantage here is that the ink and the paper layer are not waterproof in general. A layer of lacquer can achieve a water-repellent effect, but cannot prevent moisture penetration. The ink, the paper and even a wooden carrier board will be damaged if they are permanently wet or damp.

On the other hand, living space components have become known in which a plastic sheet is printed and then bonded to the wooden carrier panel. The plastic sheet is designed as a thermoplastic, for example, which is glued or laminated to the carrier panel. The plastic sheet and the ink are advantageously waterproof so that they can also be used in damp rooms. The disadvantage here is that special binders are required in the ink to make it adhere to the plastic film, which makes the ink particularly expensive compared to a water-soluble ink. In addition, the printing speed is limited by the drying time of the ink, as drying under heat is not possible. Waterproof living space components are therefore comparatively expensive in manufacturing.

It is therefore the task of the present invention to provide a living space component and a method for manufacturing such living space component which is waterproof and can be produced more cost-effectively than known from the state of the art.

The task is solved by a living space component with the features according to claim 1 and a method for manufacturing a living space component with the features according to claim 12. Preferred embodiments are the subject of the dependent claims. Further advantages and features result from the general description and from the description of the embodiments.

A living space component according to the invention comprising
- at least one, in particular flat, carrier unit and
- at least one, in particular flat, paper unit for receiving an ink layer, the paper unit being firmly connected to the carrier unit.
There is at least one at least partially covering, and in particular at least partially transparent, thermoplastic material layer. The thermoplastic material layer is firmly connected to the paper unit at least in some areas.

In particular there is a cohesive connection at least between the paper unit and the thermoplastic material layer. Preferably there is a cohesive connection between all materials and/or materials of the living space component.

Preferably, at least one ink layer is present between the paper unit and the thermoplastic material layer. There may be present two or more ink layers. The ink layers may partially overlap each other.

The invention has many advantages. One significant advantage of the invention is that inexpensive water-based inks with such binders can be used to produce a living space component with a waterproof surface. In addition, a layer of ink on the paper unit can be dried particularly quickly by applying heat in a dryer. So, the production costs are low compared to state of the art for the living space component with a waterproof surface.

In particular, the ink layer is added by printing or coating or the like. Preferably the paper unit is an, in particular endless, paper web. Advantageously the thermoplastic material layer covers the paper web at least partially and especially completely.

It is particularly preferable that at least one ink layer is present on the thermoplastic material layer and/or an, preferably additional, embossing is applied to the thermoplastic material layer. Additional printing on the thermoplastic layer is particularly advantageous for creating special effects in combination with the ink layer on the paper unit, such as a spatial depth effect or a special visual effect. This can also make the additional and more expensive production step economically worthwhile.

In particular, the thickness of a thermoplastic material layer is between 3 micrometers and 200 micrometers, preferably between 5 micrometers and 100 micrometers and particularly preferably between 10 and 50 micrometers. In particular, the thickness of the thermoplastic material layer is about 20 micrometers (+-20%). In addition, a thickness of the thermoplastic material layer can also be 250 micrometers or 300 Micrometers or even more. Advantageously, the thickness of the thermoplastic material layer enables a particularly low thermal conductivity in relation to papers or wooden materials, so that the floor feels always warm to the feet.

In particular, the thermoplastic material layer is made of polyvinyl chloride, polyethylene terephthalate, polypropylene, polyethylene or the like. Advantageously, the thermoplastic materials are particularly easy to process in conjunction with papers. In addition, the thermoplastic materials can be used to mechanically coat the paper unit. The thermoplastic materials are also cost-effective.

Preferably, at least one further thermoplastic material layer is present. In particular, the further, preferably second, thermoplastic material layer is present on the opposite side to the, in particular first, thermoplastic material layer in relation to the paper unit. Advantageously, the paper unit can be completely surrounded by the thermoplastic material, in particular encapsulated, by the further thermoplastic material layer. Advantageously, a decor unit comprising the paper unit and the, in particular first, and the further material layer can thus be processed as a single thermoplastic. Furthermore, the paper unit is encapsulated and thus particularly well protected against moisture and water. In particular, the further thermoplastic material layer is made of the same material, with e.g. material thickness, as the other, in particular first, thermoplastic material layer.

Preferably, at least one functional layer is present between the second thermoplastic material layer and the carrier unit. Advantageously, the second functional layer enables adhesion, in particular of adhesive, for bonding to the carrier unit. Alternatively or additionally, the second thermoplastic material layer can be bonded directly to the carrier unit, in particular if the second thermoplastic layer has not yet completely solidified after application, so that the thermoplastic can form a bond directly with the carrier unit.

Preferably, at least one wear protection layer is included. Advantageously, the wear protection layer also comprises a thermoplastic material, which is applied as a thermoplastic material layer. The wear protection layer is arranged in particular on an upper side, i.e. a side of the paper unit opposite the carrier side. The wear protection layer is particularly advantageous in protecting the surface from wear. In particular, the wear protection layer is transparent.

In particular, at least one coating layer is included. Preferably, the coating layer is also arranged on the upper side of the paper unit. In particular, the coating layer is arranged above the wear protection layer as seen from the top of the paper unit. Particularly advantageously, the lacquer layer enables an adjustable surface gloss.

In particular, at least the paper unit is impregnated. Advantageously, at least the paper unit is impregnated in liquid resin and then dried, in particular before the at least one ink layer is applied. Resin can be melamine resin, urea resin, urea-melamine resin or resin based on polyurethane. At paper unit is dipped into a resin tank, so that the paper unit is tinctured with resin. Alternatively, the paper unit can also be impregnated in conjunction with at least one applied ink layer. Advantageously, the impregnation enables a higher strength between the individual layers of the paper unit, so that the individual layers do not separate from each other even under high force. Advantageously, this further increases the water resistance.

Particularly preferred is at least one adhesive layer, which is present between the paper unit and the carrier unit. The adhesive layer can comprise a least one glue that is known to a person skilled in the art, e. g. polyvinyl acetate (PVAC) or the like. Advantageously, the adhesive layer enables adhesion between the paper unit and the carrier unit or the second thermoplastic material layer and the carrier unit and, in particular, between the functional layer and the carrier unit. In particular, the adhesive layer makes it possible to create a material bond between the paper unit and the carrier unit.

The living area component is preferably designed as a furniture wall panel or flooring or the like. Advantageously, the living space component provides a waterproof surface. In particular, decor units, comprising at least one paper unit and a thermoplastic material layer, are arranged at several sides of a carrier unit, such as a board made of wood, cardboard, plastic board or the like. In particular, several sides of the carrier unit are protected against water by the decor unit.

In the method according to the invention for producing a living space component described above, at least one decorative unit is produced by the following method steps:
- providing a, in particular flat paper unit (2); and
- application of at least one thermoplastic material layer (4) to the paper unit.

Preferably the thermoplastic material layer is firmly connected to the paper unit. After connection the paper unit and the thermoplastic material layer are in particular inseparable.

Preferably the paper unit, in particular with the ink layer is impregnated before application of the thermoplastic layer. In particular the paper unit with the layer are dried in a dryer at such a high temperature in that a thermoplastic material melts. Advantageous a rapid processing speed and low production costs can be achieved.

Preferably at least one ink layer is printed onto the paper unit before the application of the thermoplastic layer. In particular, another ink layer is applied to the thermoplastic material layer. Preferably, the decorative unit is applied to a carrier unit. All ink layers may be applied by any printing technology as gravure printing or digital printing.

The process also has many advantages. A significant advantage of the process is that it enables the production of a living space component with a waterproof surface.

Preferably, the thermoplastic material layer is applied at least partially by bonding and/or coating the paper unit. Advantageously, a uniform thickness of the thermoplastic material layer can thus be produced. In particular, the bonding or coating can be carried out by application through one or more nozzles or by a curtain coating process or the like.

Different methods are possible for producing a bond or a coating or the like between the thermoplastic material and the paper unit. Preferably, a thermoplastic material is used that is present as a separate foil or film or the like. For application, the foil or film layer is in particular heated so that at least part of the material melts at least in the area of a surface of the thermoplastic material. The thermoplastic material becomes preferably at least partially flowable and/or pasty. In particular, this makes the surface of the thermoplastic material adhesive. The heated thermoplastic material is then preferably contacted with the paper unit. During contacting, the molten part of the thermoplastic material bonds with the paper unit. Preferably, the thermoplastic material sticks and/or bonds with the paper unit. In particular, the long-chain polymer molecules bond with the paper fibers so that a firmly and non-destructively separable, in particular material-locking, bond is formed. On cooling, the thermoplastic material layer solidifies completely. Advantageously, the thermoplastic material can be present as a roll-shaped material with a defined layer thickness. In particular, contacting can be supported by a pressure unit, such as a pressure roller or the like, which applies a mechanical pressure force and thus supports the bonding process. A firmly and inseparable connection is formed. Such a process is particularly advantageous for slower production speeds. A thickness of the thermoplastic material layer can be set very precisely here, in particular by the pressure unit.

Alternatively, the thermoplastic material can in particular also be in the form of granules or the like, which are completely melted. The melt of the thermoplastic material is preferably then advantageously allowed to fall freely perpendicular to the paper unit in the form of a curtain, especially of adjustable thickness. s methods are possible for producing a bond or a coating or the like between the thermoplastic material and the paper unit. Preferably, a thermoplastic material is used that is present as a separate foil or film or the like. For application, the foil or film layer is in particular heated so that at least part of the material melts at least in the area of a surface of the thermoplastic material. The thermoplastic material becomes preferably at least partially flowable and/or pasty. In particular, this makes the surface of the thermoplastic material adhesive. The heated thermoplastic material is then preferably contacted with the paper unit. During contacting, the molten part of the thermoplastic material bonds with the paper unit. Preferably, the thermoplastic material sticks and/or bonds with the paper unit. In particular, the long-chain polymer molecules bond with the paper fibers so that a firmly and non-destructively separable, in particular material-locking, bond is formed. On cooling, the thermoplastic material layer solidifies completely. Advantageously, the thermoplastic material can be present as a roll-shaped material with a defined layer thickness. In particular, contacting can be supported by a pressure unit, such as a pressure roller or the like, which applies a mechanical pressure force and thus supports the bonding process. Such a process is particularly advantageous for slower production speeds. A thickness of the thermoplastic material layer can be set very precisely here, in particular by the pressure unit. In another method the method, the thermoplastic material is in particular directly applied by a duct onto the surface of the paper unit. The molten thermoplastic material comes into contact with the paper unit and then, in particular, forms at least a partial connection with the paper unit when it comes into contact with the paper unit and is entrained. Advantageously, the thermoplastic material solidifies on the paper unit and preferably forms a thermoplastic material layer with a uniform and defined layer thickness that is firmly and inseparable connected with the paper unit. Advantageously, this process is preferably suitable for higher production speed.

Other further embodiments and advantages of the method are apparent from the overall general description and from the overall description of the embodiments.

Further features and advantages of embodiments of the invention are described below with reference to the drawings. The same reference signs are used for identical or similar parts and for parts with identical or similar functions. It shows:
- Fig. 1a, b: schematic perspective views of living space components according to the invention in various embodiments;
- Fig. 2: schematic sectional view of an example of another embodiment of a living space component according to the invention; and
- Fig. 3: schematic sectional view of a further embodiment of a living space component according to the invention; and
- Fig. 4: schematic detailed view of the edge area of the living space component 100 on the paper unit 2 of Fig. 3.

It is not necessary for a living space component according to the invention and/or a method according to the invention for producing a living space component according to the invention to have all of the features described below. It is also possible that a living space component according to the invention and/or a method according to the invention for producing a living space component according to the invention has only individual features of the embodiment example described below.

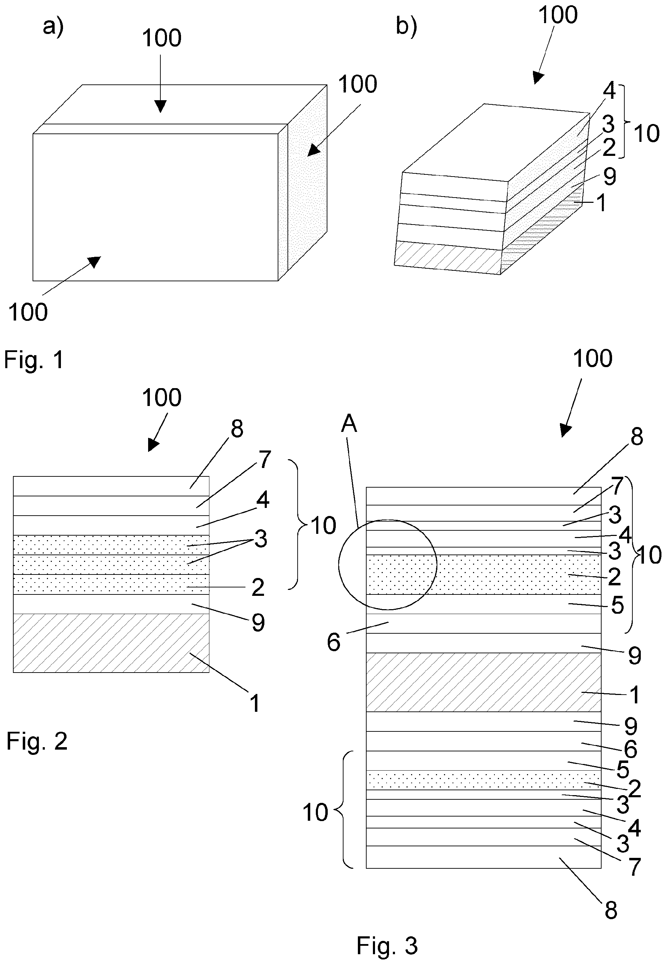

Fig. 1a and b show a schematic perspective view of living space components 100 according to the invention in various embodiments. Fig. 1a shows a piece of furniture. Here, living space components 100 according to the invention form a furniture door and furniture walls. In Fig. 1b a living space component build as flooring board or a wall panel is shown. An embodiment of a structure of the living area component 100 is shown schematically. The living space component 100 here comprises a decor unit 10 with a flat paper unit 2 with an ink layer 3 and a thermoplastic material layer 4. A flat carrier unit 1 is also included. The carrier unit 1 is formed here as a wooden carrier. An adhesive layer 9 is present between the carrier unit 1 and the paper unit 2 in order to enable a firm connection.

Fig. 2 shows a schematic sectional view of another embodiment of a living space component 100 according to the invention. The living space component 100 here comprises a flat carrier unit 1 and a flat paper unit 2 for receiving a layer of ink 3. The carrier unit 1 and the paper unit 2 are firmly and inseparable connected to one another. A thermoplastic material layer 4 is present. The thermoplastic material layer 4 is firmly connected to the paper unit 2. Two at least partially overlapping layers of ink 3 are applied to the paper unit 2 by printing. The paper unit 2 with the ink layer 3 is impregnated and then coated with the thermoplastic material layer 3. There is an inseparable connection between the paper unit 3 und the thermoplastic material layer 4. A wear protection layer 7 is present on the thermoplastic material layer 4, which protects it from abrasion. A layer of lacquer 8 is provided on the wear protection layer 7 to give the surface a defined gloss.

An ink layer 3 with water-soluble inks is applied to the paper unit 2. The paper unit 2 is impregnated with a resin so that the individual layers of the paper unit 2 can be firmly bonded even under high loads. The ink layer 3 is firmly bonded to the paper unit 2. The thermoplastic material layer 4 is firmly bonded to the paper unit 2 with the ink layer 3. The thermoplastic material layer 4 provides a living space component 100 with a water-resistant surface, whereby an inexpensive water-soluble ink can be used. The decorative unit 10, which comprises at least the paper unit 2 and the thermoplastic material layer 4, can initially be produced and then bonded to the carrier unit 1 by an adhesive layer 9, as shown here.

Fig. 3 shows a schematic sectional view of a further embodiment of a living space component 100 according to the invention.

The impregnated paper unit 2 is coated here with a first ink layer 3. The thermoplastic material layer 4 also has an ink layer 3, i.e. a second ink layer 3. As a result, a special optical depth effect can be created here, as the ink layers are spaced apart on top of each other. The thermoplastic material layer 4 is approximately 150 micrometers thick. By adjusting the layer thickness, the optical properties, such as the depth effect for the viewer, can also be adjusted by setting the distance between the ink layers 3. The higher costs for the production of the ink layer on the thermoplastic material layer 4 can be compensated by a higher achievable sales price.

A further thermoplastic material layer 4 is applied between the paper unit 2 and the carrier unit 1. The paper unit 2 is thus completely encapsulated by the thermoplastic material layers 4. The decor unit 10 can be processed like a single thermoplastic. To improve the adhesion between the further thermoplastic material layer 5 and the carrier unit 1, a functional layer 6 is provided here. The functional layer 6 enables a firm bond to be established through the adhesive layer 9.

The same structure is present on the second side of the carrier unit 1. The living area component 100 can therefore be used for a furniture door or for a furniture wall, were to sides of the carrier unit 1 are visible.

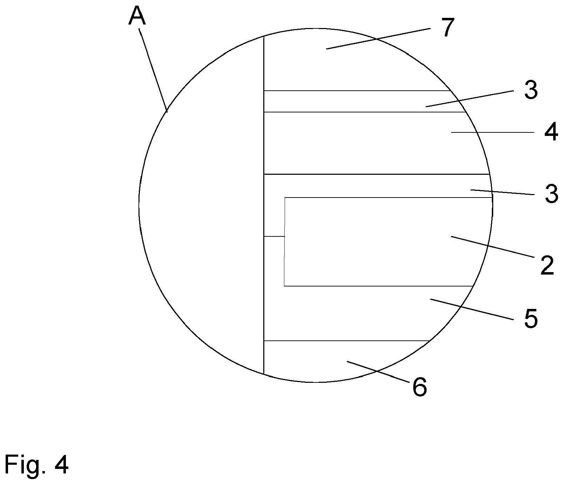

Fig. 4 shows a schematic detailed view of the edge area of the living space component 100 on the paper unit 2 from Fig. 3. Due to the adhesion of the thermoplastic material layer 4 to the paper unit 2 during application or coating, a complete encapsulation of the paper unit 2 can even be achieved here. The thermoplastic material layers 4 also enclose the sides of the paper unit 2 so that no water can penetrate the paper unit from the outside. In result, properties of the paper unit 2 have little, if any, influence on the processability. Nevertheless, inexpensive ink can be used.

### Reference sign:

- 1: carrier unit
- 2: paper unit
- 3: ink, ink layer
- 4: thermoplastic material layer
- 5: Further thermoplastic material layer
- 6: functional layer
- 7: wear protection layer
- 8: lacquer layer
- 9: adhesive layer
- 10: decor unit
- 100: Living space component

## Claims

1. A living space component (100) such as a furniture or a flooring or the like:
- at least one flat carrier unit (1); and
- at least one flat paper unit (2), the paper unit (2) being firmly connected to the carrier unit (1);
**characterized in**
**that** at least one at least partially covering thermoplastic material layer (4) is present, and wherein the thermoplastic material layer (4) is firmly, in particular inseparable, connected to the paper unit (2).

2. A living space component (100) according to claim 1, wherein at least one ink layer (3) is present between the paper unit (2) and the thermoplastic material layer (4).

3. Living space component (100) according to one of the preceding claims, wherein an ink layer (3) and/or an embossing is present on the thermoplastic material layer (4).

4. The living space component (100) according to one of the preceding claims, wherein a thickness of the thermoplastic material layer (4) is between 3 and 300 micrometers.

5. Living space component (100) according to one of the preceding claims, wherein the thermoplastic material layer (4) is formed at least partially from polyvinyl chloride, polyethylene terephthalate, polypropylene, polyethylene.

6. Living space component (100) according to one of the preceding claims, wherein at least one further thermoplastic material layer (5) is present, which is present on the opposite side to the, in particular first, thermoplastic material layer (4) in relation to the paper unit (2).

7. Living space component (100) according to one the preceding claim, wherein a functional layer (6) is present between the further thermoplastic material layer (5) and the carrier unit (1).

8. Living space component (100) according to one of the preceding claims, comprising at least one wear protection layer (8).

9. Living space component (100) according to one of the preceding claims, wherein at least the paper unit (2) is impregnated.

10. Living space component (100) according to one of the preceding claims, comprising at least one adhesive layer (9) present between the paper unit (2) and the carrier unit (1).

11. Living space component (100) according to one of the preceding claims, formed as a furniture wall, furniture door or flooring board or wall panel.

12. Method for manufacturing a living space component (100) according to one of the preceding claims, comprising at least manufacturing a decor unit (10) by the following method steps:
- providing a paper unit (2); and
- application of at least one thermoplastic material layer (4) to the paper unit, thereby forming the decorative unit (10).

13. Method according to the preceding claim, wherein an ink layer (3) is printed onto the paper unit (2) before the application of the thermoplastic layer (4).

14. Method according to one the two preceding claims, wherein the application of the thermoplastic material layer (4) is carried out at least partially by bonding and/or coating.

15. Method according to one of the three preceding claims, wherein the decorative unit (10) is firmly connected to a carrier unit (1).
